# EUROPEAN PATENT APPLICATION

(11) **EP 4 683 063 A1**
(43) Date of publication of application: **21.01.2026**
(21) Application number: 24913494.1
(22) Date of filing: 02.12.2024
(51) Int. Cl.: H01M 50/188, H01M 50/167, H01M 50/55, H01M 50/342, H01M 50/147

(54) **BATTERY, AND BATTERY PACK AND VEHICLE INCLUDING SAME**

(30) Priority: 27.12.2023 KR 20230193121; 01.02.2024 KR 20240015904
(71) Applicant: LG Energy Solution, Ltd., Seoul 07335 (KR)
(72) Inventor: JIN, Seung-Kyun, Daejeon 34122 (KR)
(74) Representative: Goddar, Heinz J.
(86) International application number: PCT/KR2024/019478
(87) International publication number: WO 2025/143601

(57) **Abstract**

The present disclosure relates to a battery including: an electrode assembly; and a housing configured to store the electrode assembly and having a crimping portion configured such that an end around an opening formed on one side thereof is bent inward, wherein a recessed portion may be formed on a bent end of the crimping portion so as to be at least partially recessed inward.

## Description

### TECHNICAL FIELD

The present disclosure relates to a battery, and a battery pack and vehicle including the same.

This application is based on and claims priority from Korean Patent Application No. 10-2023-0193121, filed on December 27, 2023, with the Korean Intellectual Property Office, the disclosure of which is incorporated herein in its entirety by reference.

This application is based on and claims priority from Korean Patent Application No. 10-2024-0015904, filed on February 01, 2024, with the Korean Intellectual Property Office, the disclosure of which is incorporated herein in its entirety by reference.

### BACKGROUND ART

Secondary battery cells, which are easy to apply depending on the product group and have electrical features such as high energy density and the like, are generally used in electric vehicles (EVs) or hybrid electric vehicles (HEVs) that are driven by an electrical drive source, as well as in portable devices. These secondary battery cells are attracting attention as a new energy source for improving eco-friendliness and energy efficiency because of the primary advantage of dramatically reducing the use of fossil fuels and another advantage of not generating by-products resulting from energy use.

A battery pack may be configured by connecting a number of battery cells in series/parallel depending on the charge/discharge capacity of the battery pack required by the electric vehicles (EVs) or hybrid vehicles (HEVs). In this case, it is common to preferentially configure a battery module including at least one battery cell and then add other elements to one or more battery modules, thereby configuring a battery pack or battery rack. Alternatively, a battery pack has recently been manufactured in a cell-to-pack type in which multiple battery cells are directly stored in a pack housing, instead of being modularized.

Meanwhile, an existing cylindrical battery is configured by storing an electrolyte and an electrode assembly in a metal housing, assembling a cap assembly to the top, and sealing the upper opening of the housing through a crimping process using a crimping device.

In such conventional cylindrical batteries, it is difficult to completely seal the top of the housing by the crimping portion. In addition, when such a cylindrical battery is installed in a battery module or battery pack, there is no structure for fixing the cylindrical battery, so it is difficult to secure the structural stability of the cylindrical battery in the battery module or battery pack.

Therefore, it is necessary to develop a cylindrical battery having a structure capable of solve the problems above.

### DISCLOSURE

### Technical Problem

The present disclosure is designed to solve the problems of the related art, and therefore the present disclosure is directed to providing a battery with enhanced sealing power by doubly sealing the opening of the battery.

In another aspect, the present disclosure aims to secure structural stability by providing a structure capable of supporting the battery when the battery is installed in a battery module or battery pack.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery including: an electrode assembly; and a housing configured to store the electrode assembly and having a crimping portion configured such that an end around an opening formed on one side thereof is bent inward, wherein a recessed portion may be formed on a bent end of the crimping portion so as to be at least partially recessed inward.

The battery may further include a housing cover configured to cover the opening, and the crimping portion may be configured to wrap around an edge of the housing cover.

The battery may further include a sealing gasket interposed between the crimping portion of the housing and the housing cover.

The sealing gasket may have a sealing reinforcement portion configured to be compressed by the recessed portion of the crimping portion.

The crimping portion may be provided with a support configured to extend to both sides of the recessed portion so as to have a constant height.

A plurality of supports may be provided along a bending direction of the crimping portion.

The battery may further include a base plate configured such that a bent end of the crimping portion is seated thereon.

The base plate may be provided with a guide configured to be inserted into the recessed portion.

A height of the guide may be configured to correspond to a recess width of the recessed portion.

A plurality of recessed portions may be provided, and a plurality of guides may be provided along a bending direction of the crimping portion.

The battery may further include a terminal configured to be electrically connected to the electrode assembly through a closed portion formed on the other side of the housing.

The terminal may be configured to be electrically connected to a second uncoated portion of the electrode assembly.

The housing cover may be provided with a venting portion configured to be ruptured when an internal pressure of the housing increases to a certain level or more.

In another aspect of the present disclosure, there is provided a battery pack including a battery according to an embodiment of the present disclosure.

In another aspect of the present disclosure, there is provided a vehicle including a battery pack according to an embodiment of the present disclosure.

### Advantageous Effects

According to one aspect of the present disclosure, it is possible to suppress or prevent leakage of the electrolyte from the housing to the outside by applying an inwardly recessed structure to the crimping portion of the battery and providing a double sealing structure between the housing cover and the sealing gasket. Therefore, according to this aspect of the present disclosure, the sealing power of the battery may be further strengthened.

In addition, according to another aspect of the present disclosure, a structure capable of supporting the battery can be provided when the battery is installed in a battery module or a battery pack by applying an inwardly recessed structure to the crimping portion of the battery, thereby securing structural stability.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematically perspective view of a battery according to an embodiment of the present disclosure.
FIG. 2 is a cross-sectional perspective view illustrating the internal structure of a battery according to an embodiment of the present disclosure.
FIG. 3 is an enlarged view of part A in FIG. 2, which illustrates a crimping portion of a battery according to an embodiment of the present disclosure.
FIG. 4 is an exploded perspective view of a battery and a base plate according to an embodiment of the present disclosure.
FIG. 5 is a cross-sectional view illustrating a housing of a battery seated on a base plate according to an embodiment of the present disclosure.
FIG. 6 is an enlarged view of part B in FIG. 5, which illustrates a structure in which a crimping portion of a battery is seated on a base plate, according to an embodiment of the present disclosure.
FIG. 7 is a drawing illustrating a crimping portion of a battery according to another embodiment of the present disclosure.
FIG. 8 is a drawing illustrating a venting direction when a thermal event occurs in a battery according to an embodiment of the present disclosure.
FIG. 9 is a diagram schematically illustrating the configuration of a battery pack including a battery according to an embodiment of the present disclosure.
FIG. 10 is a diagram schematically illustrating the configuration of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For convenience of explanation, the longitudinal direction of a winding axis of an electrode assembly wound in the form of a jellyroll in this specification will be referred to as an axial direction. In addition, the direction surrounding the winding axis will be referred to as a circumferential direction. In addition, the direction approaching or moving away from the winding axis will be referred to as a radial direction. Among these, the direction approaching the winding axis will be referred to as a centripetal direction, and the direction moving away from the winding axis will be referred to as a centrifugal direction.

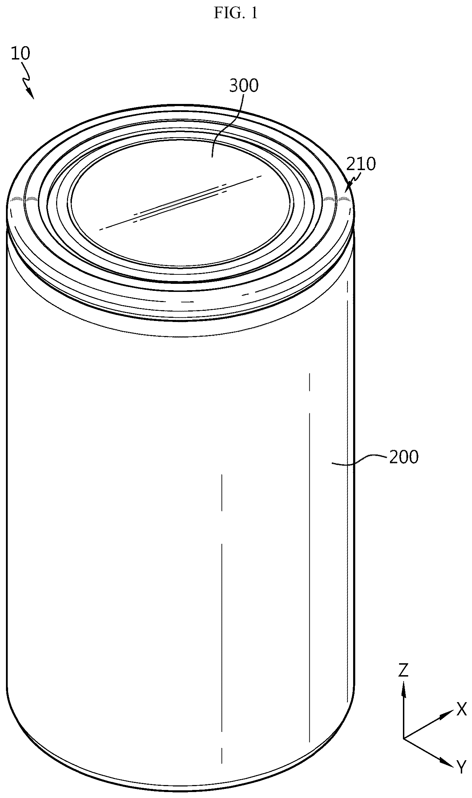

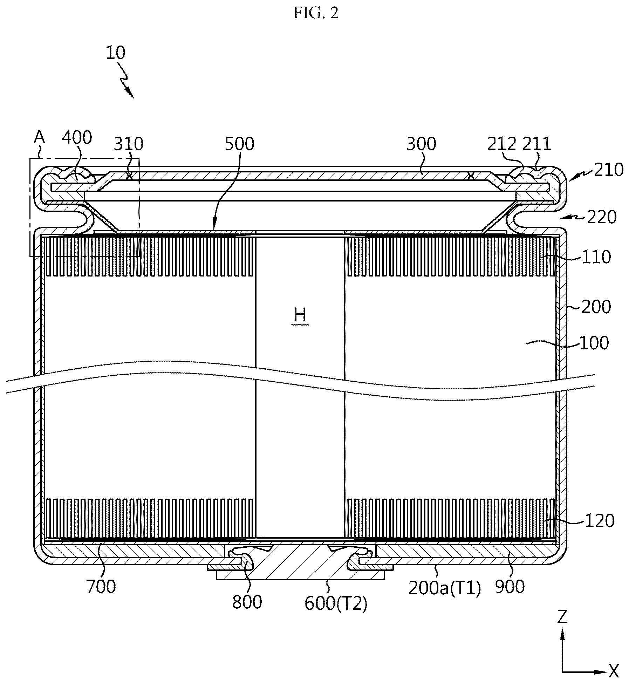

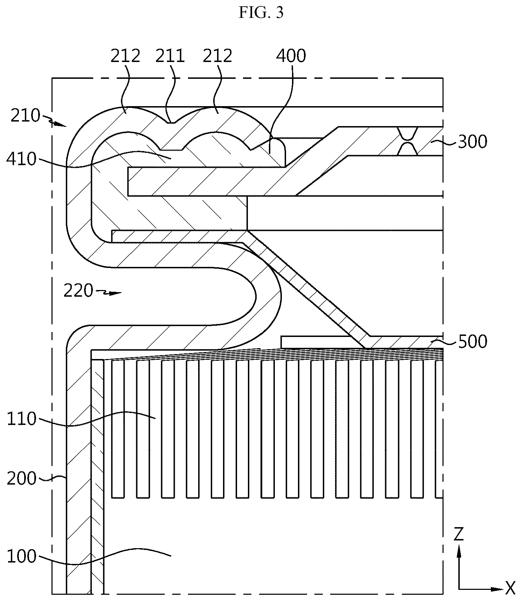

FIG. 1 is a schematically perspective view of a battery according to an embodiment of the present disclosure. In addition, FIG. 2 is a cross-sectional perspective view illustrating the internal structure of a battery according to an embodiment of the present disclosure. FIG. 3 is an enlarged view of part A in FIG. 2, which illustrates a crimping portion of a battery according to an embodiment of the present disclosure.

A battery 10 according to an embodiment of the present disclosure includes an electrode assembly 100 and a housing 200. The battery 10 of the present disclosure is not limited to a specific shape of the housing 200, and may be, for example, a cylindrical battery, as shown in the embodiment of the drawing.

In the case where the battery 10 according to an embodiment of the present disclosure is configured in a cylindrical shape, referring to FIG. 2, the electrode assembly 100 may include a first uncoated portion 110 and a second uncoated portion 120. More specifically, the electrode assembly 100 may have a structure in which a first electrode and a second electrode are wound around a winding axis with a separator interposed therebetween, thereby defining a core and an outer surface. That is, the electrode assembly 100 applied to the present disclosure may be a jellyroll-type electrode assembly 100. In this case, an additional separator may be provided on the outer surface of the electrode assembly 100 for insulation from the housing 200. The electrode assembly 100 may have a winding structure well known in the art.

The first electrode may include a first electrode current collector and a first electrode active material coated on one or both surfaces of the first electrode current collector. An uncoated portion where the first electrode active material is not coated may exist on one end of the first electrode in the width direction (parallel to the height direction of the battery cell 1 illustrated in FIG. 1). That is, the first electrode may include an uncoated portion that is not coated with an active material layer on a long side end along the winding direction and is exposed to the outside of the separator. The uncoated portion that functions as a first electrode tab will be referred to as a first uncoated portion 110 hereinafter.

The first uncoated portion 110 may be provided on the top of the electrode assembly 100 stored in the housing 200 in the height direction (parallel to the height direction of the battery 10 illustrated in FIG. 1) thereof. That is, the first electrode may include a first uncoated portion 110 that is not coated with an active material layer on the long side end and is exposed to the outside of the separator, and at least a portion of the first uncoated portion 110 may be used as an electrode tab itself. The first uncoated portion 110 may be, for example, a negative electrode tab.

The second electrode may include a second electrode current collector and a second electrode active material applied on one or both sides of the second electrode current collector. An uncoated portion on which the second electrode active material is not applied may exist on the other end in the width direction (parallel to the height direction of the battery 10 illustrated in FIG. 1) of the second electrode. That is, the second electrode may include an uncoated portion on which the active material is not coated on the long side end in the winding direction and which is exposed to the outside of the separator. The uncoated portion that functions as the second electrode tab will be referred to as a second uncoated portion 120 hereinafter.

The second uncoated portion 120 may be provided at the bottom in the height direction of the electrode assembly 100 stored in the housing 200. That is, the second electrode may include a second uncoated portion 120 that is not coated with an active material layer on the long side end and is exposed to the outside of the separator, and at least a portion of the second uncoated portion 120 may be used as an electrode tab by itself. The second uncoated portion 120 may be, for example, a positive electrode tab.

Meanwhile, in the present disclosure, any active materials known in the art may be used for the positive electrode active material coated on the positive electrode current collector and the negative electrode active material coated on the negative electrode current collector.

Meanwhile, the housing 200 may be configured to store the electrode assembly 100. The housing 200 may have an opening formed on one side. The housing 200 may receive the electrode assembly 100 through the opening. For example, as shown in FIG. 2, the housing 200 may be configured to have an opening at the top in the height direction (+Z-axis direction) and a closed portion at the bottom (in the -Z-axis direction). The housing 200 is a roughly cylindrical container and may include a conductive metal.

Referring to FIG. 3, the housing 200 may have a crimping portion 210. The crimping portion 210 may be configured such that the end around the opening of the housing 200 is bent inward.

In this case, a recessed portion 211 may be formed at the bent end of the crimping portion 210. The recessed portion 211 may be configured such that the bent end of the crimping portion 210 is at least partially recessed toward the inside. The recessed portion 211 may be formed in the middle of the bent end of the crimping portion 210. The recessed portion 211 may be formed during the crimping process.

The recessed portion 211 may be provided to be recessed inward along the circumferential direction of the battery 10. The recessed portion 211 may be configured to form a closed loop along the circumferential direction of the battery 10.

According to the above-implemented configuration of the present disclosure, by applying an inwardly recessed structure to the crimping portion 210 of the battery 10, the recessed portion 211 may double-seal the opening of the battery 10, thereby enhancing the sealing power. In particular, the electrolyte injected into the housing 200 may be suppressed or prevented from leaking to the outside.

Hereinafter, the advantages of forming the recessed portion 211 in the crimping portion 210 of the present disclosure will be described in more detail with reference to FIGS. 1 to 3.

Meanwhile, the battery 10 according to an embodiment of the present disclosure may further include a housing cover 300. The housing cover 300 may be configured to cover the opening formed on one side of the housing 200. The housing cover 300 may be fixed by the crimping portion 210 of the housing 200. Specifically, the crimping portion 210 may be configured to be bent inward and wrap around the edge of the housing cover 300. In particular, the end of the housing cover 300 may be fixed by the recessed portion 211 formed in the crimping portion 210.

As in the above-implemented configuration of the present disclosure, the recessed portion 211 formed in the crimping portion 210 to be recessed toward the housing cover 300 may more stably fix the housing cover 300.

Meanwhile, the housing 200 may be provided with a beading portion 220. The beading portion 220 may be configured such that the outer circumference of the housing 200 is pressed inward to a predetermined depth. The inner diameter of the housing 200 may be formed to be smaller than the diameter of the electrode assembly 100 in the area where the beading portion 220 is formed.

More specifically, the beading portion 220 may be formed at an end adjacent to the opening. The beading portion 220 may be formed on the top of the electrode assembly 100. The beading portion 220 may be configured to be pressed inward in the area between the opening formed on one side of the housing 200 and the storage portion that receives the electrode assembly 100.

The beading portion 220 may prevent the electrode assembly 100, which may have a size that roughly corresponds to the inner diameter of the housing 200, from popping out through the opening formed on the upper end of the housing 200, and may function as a support on which the housing cover 300 is seated.

To this end, the beading portion 220 may provide a support surface on which the housing cover 300 may be seated. In this case, the upper surface of the beading portion 220 may be configured to extend in a direction roughly parallel to the bottom surface of the housing 200, that is, in a direction roughly perpendicular to the side wall of the housing 200. Thereby, the beading portion 220 may more stably support the edge of the housing cover 300.

According to the above-implemented configuration of the present disclosure, since the beading portion 220 is provided in addition to the crimping portion 210, the fixing force of the housing cover 300 may be improved without a separate fixing member, and the sealing of the housing 200 may be secured.

In addition, the battery 10 according to an embodiment of the present disclosure may further include a first current collector 500. The first current collector 500 may be stored inside the housing 200, and may be configured to be electrically connected to the electrode assembly 100 and the housing 200. That is, the first current collector 500 may be configured to electrically connect between the electrode assembly 100 and the housing 200.

The first current collector 500 may be provided on one side of the electrode assembly 100. For example, as shown in FIG. 2, the first current collector 500 may be provided at the top of the electrode assembly 100 so as to be seated on the beading portion 220.

Meanwhile, the battery 10 according to an embodiment of the present disclosure may further include a sealing gasket 400. The sealing gasket 400 may be configured to surround the edge of the housing cover 300 between the beading portion 220 and the crimping portion 210. That is, the sealing gasket 400 may be interposed between the crimping portion 210 of the housing 200 and the housing cover 300 and between the first current collector 500 and the housing cover 300. In this case, the beading portion 220 may function as a support for fixing not only the housing cover 300 but also the sealing gasket 400.

The sealing gasket 400 may be configured to be compressed by external pressure. The sealing gasket 400 may be made of a material having elasticity. For example, the sealing gasket 400 may be made of a material such as silicone.

In particular, referring to FIG. 3, the sealing gasket 400 may be provided with a sealing reinforcement portion 410. The sealing reinforcement portion 410 may be configured to be compressed by the recessed portion 211 of the crimping portion 210. That is, since the bent end of the crimping portion 210 is configured to be recessed toward the sealing gasket 400, at least a portion of the sealing gasket 400 may be configured to be compressed inward.

According to the above-implemented configuration of the present disclosure, since the sealing reinforcement portion 410 is formed by the recessed portion 211, the sealing gasket 400 is double-sealed, so that the fixing force of the housing cover 300 may be further improved. In addition, the electrolyte injected into the housing 200 may be suppressed or prevented from leaking to the outside, thereby further improving the sealing property of the housing 200.

Meanwhile, the battery 10 according to an embodiment of the present disclosure may further include a terminal 600, a second current collector 700, an insulating gasket 800, and/or an insulator 900.

The terminal 600 may be configured to be electrically connected to the second uncoated portion 120 of the electrode assembly 100. The terminal 600 may be configured to penetrate the housing 200 in the closed portion formed on the opposite side of the opening of the housing 200. The terminal 600 may penetrate approximately the center of the bottom surface of the housing 200. The terminal 600 may be coupled to a second current collector 700 coupled to the second uncoated portion 120, or may be coupled to a lead tab (not shown) coupled to the second uncoated portion 120 so as to be electrically connected to the electrode assembly 100.

The second current collector 700 may be electrically coupled to the second uncoated portion 120. The current collector 700 may be provided on the other side of the electrode assembly 100. For example, as shown in FIG. 2, the second current collector 700 may be provided at the bottom of the electrode assembly 100. The second current collector 700 may include a conductive metal material.

An insulating gasket 800 may be interposed between the housing 200 and the terminal 600 to prevent the housing 200 and the terminal 600 having opposite polarities from coming into contact with each other.

The second uncoated portion 120 and/or the second current collector 700 may be maintained in an insulation state from the housing 200. To this end, an insulator 900 may be interposed between the second uncoated portion 120 and the housing 200 and/or between the second current collector 700 and the housing 200.

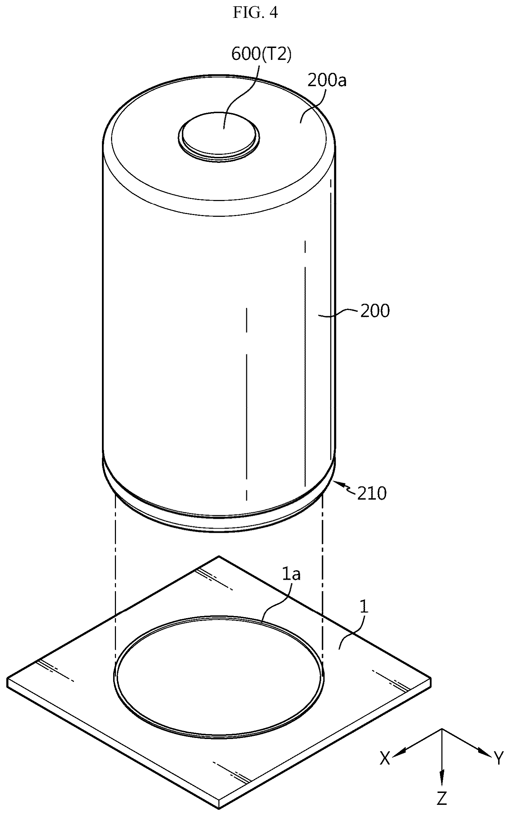

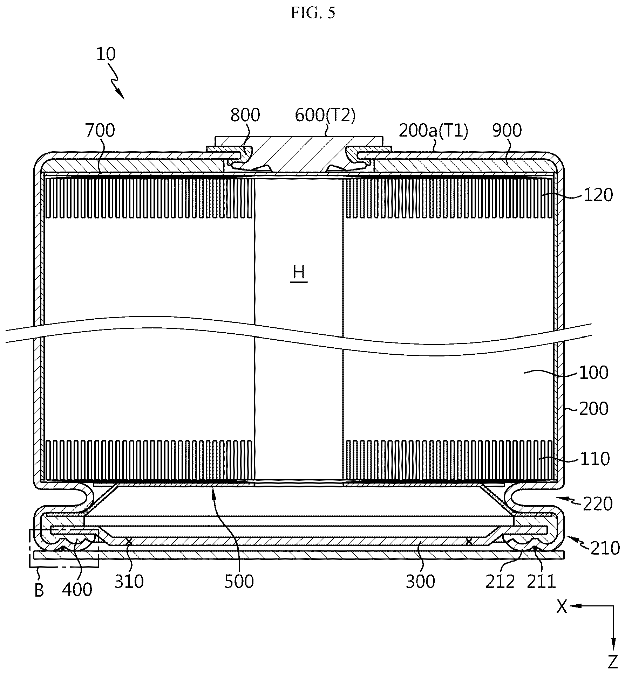

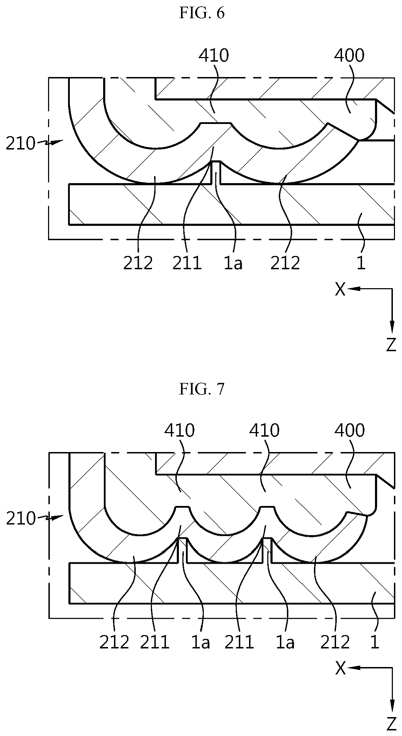

A case where the crimping portion 210 of the battery 10 is mounted on another structure will be described with reference to FIGS. 4 to 7. FIG. 4 is an exploded perspective view of a battery and a base plate according to an embodiment of the present disclosure, and FIG. 5 is a cross-sectional view illustrating a housing of a battery seated on a base plate according to an embodiment of the present disclosure. In addition, FIG. 6 is an enlarged view of part B in FIG. 5, which illustrates a structure in which a crimping portion of a battery is seated on a base plate, according to an embodiment of the present disclosure. FIGS. 4 to 7 are drawings illustrating the state where the crimping portion 210 of the battery 10 in FIG. 1 is seated on a base plate 1 while facing downward.

Referring to FIGS. 5 and 6 together with FIG. 3, the crimping portion 210 may be provided with a support 212. The support 212 may be formed by forming a recessed portion 211 on the bent end of the crimping portion 210. The support 212 may be configured to extend to both sides of the recessed portion 211. The support 212 may be configured in a closed loop extending from the recessed portion 211. A plurality of supports 212 may be provided along the bending direction of the crimping portion 210 (radial direction of the battery 10). The supports 212 may be arranged along the radial direction of the battery 10.

The support 212 may be configured to have a constant height. That is, the height of the support 212 may be configured to correspond to the depth to which the recessed portion 211 is pressed inward. The support 212 may be configured to protrudes outward from the recessed portion 211. The recessed portion 211 and the support 212 may be configured in a wave shape.

According to the above-implemented configuration of the present disclosure, if the bent end of the crimping portion 210 of the battery 10 is seated on another structure, the housing 200 of the battery 10 may be stably erected, thereby ensuring structural stability.

Meanwhile, the battery 10 according to an embodiment of the present disclosure may further include a base plate 1. The base plate 1 may be provided outside the housing 200 of the battery 10. The base plate 1 may be configured such that the bent end of the crimping portion 210 is seated thereon. To this end, the base plate 1 may be configured as a plate having a flat surface. More specifically, the support 212 of the crimping portion 210 may be configured to be seated on the base plate 1.

According to the above-implemented configuration of the present disclosure, when the support 212 of the crimping portion 210 is seated on the base plate 1, the housing 200 may be more stably erected on the base plate 1. In particular, since a plurality of supports 212 are provided, the contact area between the bent end of the crimping portion 210 and the base plate 1 increases, so that the housing 200 may be stably seated on the base plate 1.

In addition, according to the above-implemented configuration of the present disclosure, since the crimping portion 210 of the housing 200 faces downward and the support 212 is seated on the base plate 1, the sealing gasket 400 may be compressed more strongly by the weight of the housing 200 itself or the weight of the internal components of the housing 200, thereby further improving the sealing power of the housing 200.

Referring to FIG. 4 and FIG. 6, the base plate 1 may be provided with a guide 1a. The guide 1a may be configured so that at least a portion of the base plate 1 protrudes outward. When the housing 200 is seated on the base plate 1, the guide 1a may be configured to be inserted into the recessed portion 211. The guide 1a may be provided at a position corresponding to the position of the recessed portion 211 when the housing 200 is seated on the base plate 1. In addition, the guide 1a may be configured to have a shape or size corresponding to the recessed portion 211. For example, as shown in FIG. 4, the recessed portion 211 may be formed in an approximately circular shape along the circumferential direction of the housing 200, and the guide 1a may also be formed as an approximately circular closed loop.

The height of the guide 1a may be configured to correspond to the recess width of the recessed portion 211. That is, when the housing 200 is seated on the base plate 1, the end of the guide 1a may be configured to support the outer surface of the recessed portion 211. Therefore, the support 212 of the crimping portion 210 may be configured to be seated in close contact with the base plate 1.

FIG. 7 is a drawing illustrating a crimping portion of a battery according to another embodiment of the present disclosure.

Referring to FIG. 7, a plurality of recessed portions 211 may be provided. The plurality of recessed portions 211 may be arranged along the bending direction of the crimping portion 210. Accordingly, at least two or more supports 212 may also be provided. In addition, in the case where the sealing gasket 400 is provided, a plurality of sealing reinforcement portions 410 may also be provided.

In addition, a plurality of guides 1a may be provided. The plurality of guides 1a may be provided along the bending direction of the crimping portion 210. Therefore, the plurality of guides 1a may be configured to be respectively inserted into a plurality of recessed portions 211 provided at corresponding positions.

According to the above-implemented configuration of the present disclosure, since a plurality of sealing reinforcement portions 410 are provided, the fixing force of the housing cover 300 and the sealing power of the housing 200 may be further improved. In addition, according to the above-implemented configuration of the present disclosure, when the housing 200 is seated on another structure such as the base plate 1, the fixing force of the housing 200 may be secured without a separate fixing structure. Therefore, structural stability between the housing 200 and the base plate 1 may be secured.

Meanwhile, referring to FIG. 4 and FIG. 5, the battery 10 according to an embodiment of the present disclosure may utilize the terminal 600 exposed through the opposite side of the opening of the housing 200 as a second electrode terminal T2. In addition, the outer surface 200a of the closed portion located on the opposite side of the opening of the housing 200 may function as a first electrode terminal T1. That is, the remaining area, excluding the area (including the area where the insulating gasket 800 is exposed when the insulating gasket 800 is exposed to the outside of the terminal 600 through the outer surface 200a of the closed portion) occupied by the terminal 600 among the closed portion of the housing 200, as the first electrode terminal T1.

According to the above-implemented configuration of the present disclosure, when electrically connecting multiple batteries 10, both positive electrodes and negative electrodes may be connected in one direction, thereby simplifying the electrical connection structure. In addition, according to the above-implemented configuration of the present disclosure, since most of the closed portion located on the opposite side of the opening of the housing 200 may be used as an electrode terminal, it has the advantage of securing a sufficient area for welding parts for electrical connection.

Accordingly, as shown in FIGS. 4 and 5, even if the crimping portion 210 of the housing 200 is seated on another structure such as the base plate 1, both the positive electrode and the negative electrode may be connected on the other side where the closed portion of the battery 10 is located.

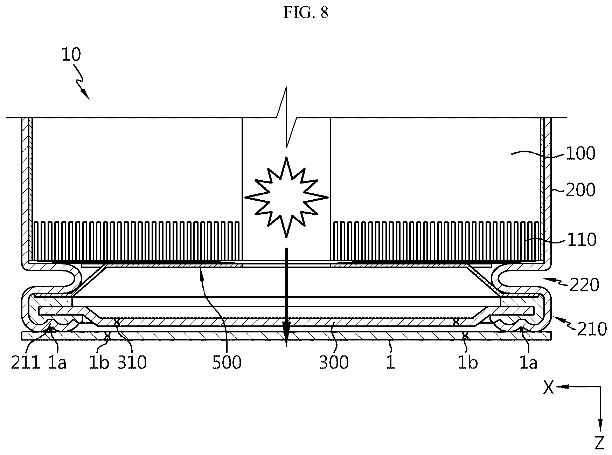

FIG. 8 is a drawing illustrating a venting direction when a thermal event occurs in a battery according to an embodiment of the present disclosure.

Meanwhile, the housing cover 300 may be provided with a venting portion 310. The venting portion 310 may be configured to rupture when the internal pressure of the housing 200 increases to a certain level or more. For example, the venting portion 310 may be formed in a portion of the housing cover 300 and may be a structurally weaker area than the surrounding area so that it may be easily broken when the internal pressure increases to a certain level or more. The venting portion 310 may be, for example, an area that is thinner than the surrounding area. Referring to FIG. 1, the venting portion 310 may form a closed loop of approximately a circle.

Accordingly, when a thermal event occurs inside the housing 200, the venting portion 310 may be ruptured by the internal pressure, so that the venting gas or flame may be smoothly discharged to the outside. That is, directional venting of the venting gas or flame may be induced. As a result, the internal pressure of the housing 200 may be reduced, thereby minimizing the risk of explosion of the battery 10.

Meanwhile, the housing 200 may be seated on the base plate 1 so that the venting portion 310 faces downward. The venting portion 310 may be provided further inward than the crimping portion 210. That is, the outermost side of the housing cover 300 may be provided to be spaced a predetermined distance apart from the base plate 1. As a result, a sufficient distance may be formed between the venting portion 310 and the base plate 1, so that the venting portion 310 may be ruptured by the internal pressure.

Accordingly, if a thermal event occurs inside the housing 200, the venting gas or flame may be discharged toward the base plate 1. For example, as indicated by the arrow in FIG. 8, the venting gas or flame may be discharged toward the lower side of the housing 200.

According to the above-implemented configuration of the present disclosure, when a battery pack including a plurality of batteries 10 is installed in a vehicle, the venting gas or flame discharged when a thermal event occurs in the battery 10 may be prevented from moving toward the driver located above.

In addition, in the present disclosure, since both sides of the housing cover 300 are strongly fixed by the recessed portion 211 and the sealing reinforcement portion 410, even if the venting portion 310 is ruptured so that venting gas or flames are discharged to the outside, the remaining portion of the housing cover 300, excluding the venting portion 310, or other components inside the housing 200 may be suppressed or prevented from being discharged to the outside together.

In addition, the base plate 1 may be provided with a rupture portion 1b. The rupture portion 1b may be configured to be ruptured by the pressure of the venting gas or the like discharged from the housing 200. For example, the rupture portion 1b may be formed in a portion of the base plate 1 as a structurally weaker area than the surrounding area so that it may be easily ruptured by a specific pressure. The rupture portion 1b may be configured to be thinner than the surrounding area.

The rupture portion 1b may be provided further outward than the venting portion 310. That is, the area of the closed loop formed by the rupture portion 1b may be configured to be greater than the area of the closed loop formed by the venting portion 310. The rupture portion 1b may be configured to be ruptured by the pressure of venting gas or flame discharged to the outside of the housing 200, so that the venting gas or flame may be smoothly discharged to the outside of the base plate 1.

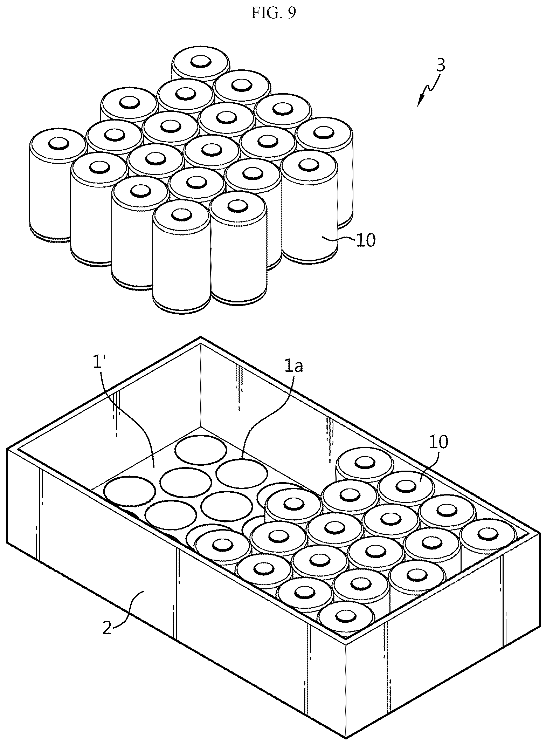

FIG. 9 is a diagram schematically illustrating the configuration of a battery pack including a battery according to an embodiment of the present disclosure.

Referring to FIG. 9, a battery pack 3 according to an embodiment of the present disclosure may include a battery assembly in which a plurality of batteries 10 according to an embodiment of the present disclosure described above are electrically connected, and a pack housing 2 that stores the battery assembly.

In this case, the pack housing 2 according to an embodiment of the present disclosure may include a plurality of base plates 1. The plurality of base plates 1 may extend in all directions to form a bottom surface 1' of the pack housing 2. A plurality of batteries 10 may be seated on the bottom surface 1' of the pack housing 200 so that the guide 1a is inserted into the recessed portion 211 of the crimping portion 210.

Meanwhile, the battery pack 3 according to an embodiment of the present disclosure may further include components such as a bus-bar for electrical connection, a cooling unit, and a power terminal, but these are omitted from the drawings for convenience of illustration.

According to the above-implemented configuration of the present disclosure, since the guide 1a is provided on the bottom surface 1' of the pack housing 200, in the case where a plurality of batteries 10 are stored in the pack housing 200, the positions of the batteries 10 may be guided. In addition, the fixing force between the battery 10 and the pack housing 200 may be improved.

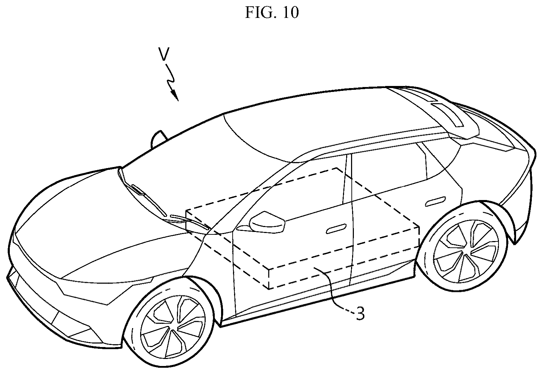

FIG. 10 is a diagram schematically illustrating the configuration of a vehicle including a battery pack according to an embodiment of the present disclosure.

Referring to FIG. 10, a vehicle V according to an embodiment of the present disclosure may be, for example, an electric vehicle, a hybrid vehicle, or a plug-in hybrid vehicle, and may include a battery pack 3 according to an embodiment of the present disclosure. The vehicle V may include a four-wheel vehicle and a two-wheel vehicle. The vehicle V may be operated by power supplied from the battery pack 3 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains, and these modifications should not be understood separately from the technical ideas or perspectives of the present disclosure.

## Claims

1. A battery comprising:
an electrode assembly; and
a housing configured to store the electrode assembly and having a crimping portion configured such that an end around an opening formed on one side thereof is bent inward,
wherein a recessed portion is formed on a bent end of the crimping portion so as to be at least partially recessed inward.

2. The battery of claim 1,
further comprising a housing cover configured to cover the opening,
wherein the crimping portion is configured to wrap around an edge of the housing cover.

3. The battery of claim 2,
further comprising a sealing gasket interposed between the crimping portion of the housing and the housing cover.

4. The battery of claim 3,
wherein the sealing gasket has a sealing reinforcement portion configured to be compressed by the recessed portion of the crimping portion.

5. The battery of claim 1,
wherein the crimping portion is provided with a support configured to extend to both sides of the recessed portion so as to have a constant height.

6. The battery of claim 5,
wherein a plurality of supports are provided along a bending direction of the crimping portion.

7. The battery of claim 1,
further comprising a base plate configured such that a bent end of the crimping portion is seated thereon.

8. The battery of claim 7,
wherein the base plate is provided with a guide configured to be inserted into the recessed portion.

9. The battery of claim 8,
wherein a height of the guide is configured to correspond to a recess width of the recessed portion.

10. The battery of claim 8,
wherein a plurality of recessed portions are provided, and
wherein a plurality of guides are provided along a bending direction of the crimping portion.

11. The battery of claim 1,
further comprising a terminal configured to be electrically connected to the electrode assembly through a closed portion formed on the other side of the housing.

12. The battery of claim 11,
wherein the terminal is configured to be electrically connected to a second uncoated portion of the electrode assembly.

13. The battery of claim 2,
wherein the housing cover is provided with a venting portion configured to be ruptured when an internal pressure of the housing increases to a certain level or more.

14. A battery pack comprising a battery according to at least one of claims 1 to 13.

15. A vehicle comprising a battery according to at least one of claims 1 to 13.
